Europäisches Patentamt

European Patent Office

Office européen des brevets

(19)

(11) Publication number: **0 072 445**
A2

# (12) EUROPEAN PATENT APPLICATION

(21) Application number: 82106452.4

(22) Date of filing: 17.07.82

(51) Int. Cl.³: **C 08 F 289/00**
C 09 K 7/02

(30) Priority: 27.07.81 GB 8123088.

(43) Date of publication of application:
23.02.83 Bulletin 83/8

(84) Designated Contracting States:
AT BE CH DE FR GB IT LI NL SE

(71) Applicant: BW Mud Ltd.
31 Melville Street
Edinburgh EH3 7JQ Scotland(GB)

(72) Inventor: Frost, David
Holly Tree Lodge Oak Grove
Spy Lane Loxwood W. Sussex(GB)

(74) Representative: Grubb, Philip William
c/o B.A. Yorke & Co 98 The Centre
Feltham Middlesex TW13 4EP(GB)

(54) Temperature stable drilling fluids.

(57) Water-soluble or water-dispersible graft copolymers of lignite or humic acid with a vinyl monomer, e.g. acrylic acid, are useful as fluid loss control additives for aqueous oil drilling muds. The copolymers contain at least 20% by weight, preferably 50-80% by weight of lignite or humic acid, based on the dry weight of the product.

EP 0 072 445 A2

0072445

Case 118-4578/F/C

## TEMPERATURE STABLE DRILLING FLUIDS

In the drilling of oil wells using water-based drilling muds, it is conventional to use organic colloid materials such as starches and soluble cellulose derivatives for reducing fluid loss by filtration into the strata which are being drilled. When operating at high temperatures and pressures, however, such additives may undergo thermal degradation, leading to loss of effectiveness. At the same time the fine solids in the mud may flocculate, giving rise to further deterioration in fluid loss control.

It is also known to use fluid-loss reducing additives produced by the reaction of a salt of sulphonated lignite or sulphonated humic acid with modified phenol/formaldehyde resins. Furthermore, graft copolymers of acrylic acid with up to 10% by wt. of a polyhydroxy polymeric compound including causticized lignite are known for the benefication of clays used in aqueous oil drilling muds.

It has now been found that graft copolymers of acrylic acid and other vinyl monomers giving water-soluble polymers with causticized or untreated lignite, in which the lignite constitutes at least 20% by weight of the product, are particularly useful as fluid-loss reducing additives and thinners in aqueous drilling muds.

0072445
118-4578/F/C

Accordingly, the present invention provides a water-soluble or water-dispersible graft copolymer of lignite or humic acid with a vinyl monomer, the lignite or humic acid constituting at least 20% of the dry weight of the product. The term humic acid includes both the free acid and its alkali metal salts.

The lignite may be causticized; that is, treated with alkali, or may be untreated. Partially treated lignite or mixtures of treated and untreated may be used but preferably the lignite is untreated.

The alkali soluble fraction of the lignite (humic acid) may be isolated by alkali extraction followed by precipitation, and used in the process of the invention either alone or mixed with unextracted lignite. An aqueous solution of sodium or potassium humate obtained by alkaline extraction of lignite without precipitation may also be used.

The vinyl monomer is preferably a water-soluble monomer which can be polymerised directly to a water-soluble polymer, for example acrylic acid, acrylonitrile, acrylamide, methacrylic acid, N-vinyl pyrrolidone and 2-acrylamido-2-methylpropane sulphonic acid. Alternatively a vinyl monomer may be used which on polymerisation gives a water-insoluble polymer which is capable of being converted by hydrolysis to a water-soluble polymer, for example acrylic esters, e.g. methyl acrylate or vinyl esters, e.g. vinyl acetate. Mixtures of two or more vinyl monomers may be used, the end product being rendered water-soluble by hydrolysis as necessary.

The preferred vinyl monomers are acrylic acid, which may be polymerised as the free acid or in the form of a salt, for example the sodium salt, acrylic esters, acrylonitrile and acrylamide, of which acrylic acid is most preferred.

Although there must be at least 20% by weight of lignite in the dry product, the quantity of lignite used may be considerably greater than this and may even be as high as 90%. Preferably the product contains from 50 to 80% by weight lignite, more preferably 50 to 60%.

The graft polymerisation is carried out in conventional manner by polymerising the vinyl monomer in the presence of lignite, preferably in the presence of a solvent. Where the vinyl monomer is itself water-soluble, the solvent is preferably water either in bulk or as the disperse phase in a water-in-oil emulsion. Alternatively where the vinyl monomer is water-insoluble an organic solvent may be used which is unaffected by the reaction conditions, for example hexane or toluene.

The polymerisation conditions are conventional for vinyl addition polymerisation. Polymerisation may be initiated by ultraviolet light, optionally in the presence of a UV-sensitizer, or by a peroxide type free radical initiator. Suitable initiators include hydrogen peroxide; hydroperoxides for example t-butyl hydroperoxide and cumene hydroperoxide; dialkyl peroxides for example di-t-butyl peroxide; diacyl peroxides for example benzoyl peroxide and acetyl peroxide; per-acids and their salts and esters, for example performic acid, peracetic acid, perbenzoic acid, sodium peracetate, t-butyl peroxybenzoate, etc. Inorganic per-salts may be used, particularly persulphates and perborates, for example ammonium persulphate and sodium perborate.

Redox-activated catalyst systems may also be used, and may enable the reaction to be carried out at a lower initial temperature than would otherwise be the case. Examples of such systems are ferrous salts/persulphates, thiols/persulphates, sodium bisulphite/ tert. -butyl hydroperoxide and sodium sulphite/sodium bromate. Where systems containing thiols are used, the thiol, e.g. 2-mercaptoethanol, may simultaneously act as a chain terminating agent to lower the molecular weight of the product.

The processing temperature is not critical and the reaction may be carried out for example at 20-100°C. The polymerisation is exothermic, so that starting at room temperature the temperature may rise to 50 - 60°C or more, depending upon the concentration of monomer present, the bulk of the reaction medium and the rate of the reaction.

When the reaction is carried out in an aqueous medium, the pH may be controlled by the addition of alkali. Where acrylic acid is the monomer it is preferred to neutralise for example with sodium hydroxide to pH 7-8, so that in effect it is the acrylate anion which is polymerized.

Although the molecular weight of the graft copolymer cannot be measured directly, it is preferred that the polymerisation conditions are such that the chain length of the vinyl polymer part is relatively short. That is, conditions should preferably be used under which the vinyl monomer, if polymerised in the absence of lignite, would give a polymer of molecular weight no greater than 100,000. Preferably the molecular weight would be from 2000 to 20,000, more preferably from 2000 to 10,000. This may be achieved by using high concentrations of initiator (for example from 1% to 10%, preferably 5-7%, of the weight of vinyl monomer), preferably in conjunction with a chain-terminating agent such as 2-mercaptoethanol, in quantities of from 0.1% to 5%, preferably 1-3% by weight of the vinyl monomer. Chain termination may also be brought about by the presence of isopropanol in relatively large quantities, for example by the use of isopropanol as a reaction medium.

The lignite should be thoroughly mixed with the vinyl monomer solution, preferably before polymerisation is initiated.

If the lignite is of coarse particle size, it may be desirable to reduce its particle size for example by milling or by vigorous shearing in a Silverson mixer. This may be carried out before, during or after the steps of mixing with the vinyl monomer and polymerisation of the vinyl monomer, but preferably no later than the polymerisation step. Preferably size reduction and mixing with the vinyl monomer is carried out as a single process, and optionally size reduction may be continued during the polymerisation.

The polymerisation product, which is normally a viscous liquid, may be added to the drilling mud without further treatment, if the polymerisation was carried out using a water-soluble monomer in an aqueous system. Alternatively, the product may be dried and ground to a powder which may subsequently be redissolved in water or added directly to a drilling mud.

If the vinyl monomer is an acid and was polymerised in the free acid form it is preferred to neutralise the acidic polymer with alkali, for example sodium hydroxide, before use.

If the polymerisation was carried out in organic solution, the solvent is preferably evaporated. The residue, if water-dispersible, may be ground to a powder and used as described above. If the product is not water-dispersible it is first rendered water-dispersible by hydrolysis, for example by boiling with aqueous alkali until all the vinyl polymer chains become hydrophilic. The resulting dispersion may be used directly or dried and powdered as described above.

The products according to the invention may be added to aqueous drilling muds in a concentration of from 1-20 ppb, preferably 2-10 ppb based on the dry weight of the product. One ppb (pound per barrel) is approximately equivalent to 0.28% wt./vol. The resulting drilling mud has low fluid loss properties both under normal conditions and under high temperature and pressure (250°F, 500 psi), and retains its good properties after prolonged exposure to high temperatures and pressures.

By the terms water-soluble and water-dispersible as applied to the products of the invention is meant that the products will form solutions or dispersions in water in the absence of additional solubilizing or dispersing agents, at a concentration of at least 1 ppb or 0.28% wt./vol., preferably at a concentration of at least 20 ppb or 5.6% wt./vol.

The products according to the invention act to reduce excessive viscosity and gel formation caused by flocculation of clay solids
in the mud. This is in contrast to the properties of the known
lignite/acrylic acid clay beneficating agent, which are designed
to increase the viscosity and gel strength of clay suspensions.

The following Examples illustrate the invention:

## Example 1

A solution of acrylic acid (80 ml = 84 g) in water (100 ml) is
neutralised to pH 7.5 with 46% aqueous sodium hydroxide and untreated
lignite (100 g) added. The mixture is sheared vigorously in a
Silverson mixer and polymerisation initiated by addition of ammonium
persulphate (5 g in a small vol. of water) and 2-mercaptoethanol
(2 ml). When the exotherm subsides the resultant viscous liquid is
dried in vacuo and the residue is ground to a fine powder.

## Example 2

Untreated lignite (150 g) is added to a solution of acrylic
acid (50 ml = 52.5 g) in water (200 ml). The mixture is sheared
vigorously on a Silverson mixer and polymerised by addition of ammonium persulphate·(5 g in a small volume of water) and 2-mercaptoethanol (1 ml). When the exotherm subsides the resultant viscous
liquid is dried in vacuo and the residue is ground to a fine powder.

The products of Examples 1 and 2 have good fluid loss properties
when tested in aqueous suspension by the standard API.procedure.

## Example 3

100 Grams of untreated lignite are added over 45 minutes, with
stirring, to a mixture of 150 ml    30% aqueous sodium hydroxide and 140 ml deionized water. After a further 30 minutes stirring a solution of sodium humate is obtained. To this is added 84 g acrylic acid, and the mixture is stirred for a further hour. The polymerisation reaction is then initiated by addition of 5 g ammonium persulphate and 2 ml 2-mercaptoethanol. Reaction is continued until the initial exotherm completely subsides. The liquid product is used directly for fluid loss control.

## Example 4

A mixture of 84 g of acrylic acid and 40 ml water is neutralized to pH 7.0 with 30% aqueous sodium hydroxide, and 100 g untreated lignite is added over 5 minutes with vigorous stirring at 50°C.

Polymerisation is initiated as in Example 1, and stirring continued for 30 minutes until the reaction is over. No size reduction step (milling or Silverson mixing) is carried out at any stage. The liquid product is used directly for fluid loss control.

## Example 5

A mixture of 84 g acrylic acid and 100 ml water is neutralized to pH 7.0 with 30% aqueous NaOH. The reaction flask is flushed with nitrogen and 100 g lignite added to the stirred mixture. After 10 minutes, the polymerisation reaction is initiated as in Example 1. After 45 minutes the product is transferred to a Silverson mixer and sheared vigorously for 30 minutes.

## Example 6

Example 5 is repeated except that shearing with the Silverson mixer (under nitrogen) is carried out during addition of lignite. After 15 minutes polymerisation is initiated with 4.2 g potassium persulphate and 2 ml 2-mercaptoethanol, and shearing is continued until the exotherm subsides, and subsequently for a further hour.

## Example 7

An aqueous drilling mud is prepared by mixing the following

ingredients:

| | |
|---|---|
| seawater | 1 bbl |
| prehydrated Wyoming bentonite | 15 lb (6.8 kg) |
| barite | 666 g |
| sodium hydroxide | 1 g |
| commercial polyacrylate dispersing agent | 1 g |
| product of Example 1 (powder) | 10 lb (4.5 kg) |

## Examples 8-12

Example 7 is repeated using the product of Example 2 in place of that of Example 1. The liquid compositions of Examples 3 to 6 are also used, in quantities corresponding to 10 lb dry weight of active material.

The muds of Examples 7 to 12 show excellent fluid loss properties both by the standard API procedure and by the HTHP (high temperature high pressure) test at 250°F and 500 psi, and have good viscosity properties and low gel strengths. These good properties are substantially retained after treatment of the muds at 400°F for 16 hours in sealed rotating cylindrical vessels (hot rolling).

Claims

1.  A water-soluble or water-dispersible graft copolymer of lignite or humic acid with a vinyl monomer, the lignite or humic acid constituting at least 20% of the dry weight of the product.

2.  A graft copolymer as claimed in Claim 1 in which the vinyl monomer is acrylic acid.

3.  A graft copolymer as claimed in Claim 1 or Claim 2 in which the lignite or humic acid constitutes from 50 to 80% of the dry weight of the product.

4.  A process for the preparation of a copolymer as claimed in Claim 1 comprising the step of polymerising the vinyl monomer in the presence of lignite or humic acid in an aqueous or organic medium.

5.  A process as claimed in Claim 4 in which the polymerisation conditions are such that the vinyl monomer, if polymerised under the same conditions in the absence of lignite, would give a polymer of molecular weight from 2000 to 20000.

6.  A process as claimed in Claim 4 or Claim 5 in which polymerisation is carried out in the presence of from 1% to 10% of initiator (based on the weight of vinyl monomer).

7.  A process as claimed in any one of Claims 4-6 in which polymerisation is carried out in the presence of from 0.1% to 5% of a chain-terminating agent (based on the weight of the vinyl monomer).

8.  A process as claimed in any one of Claims 4-7 in which the lignite is used in solid form and is subjected to a size reduction step before, during or after the steps of mixing with the vinyl monomer and polymerisation of the vinyl monomer.

9.  A process for reducing fluid loss in aqueous oil drilling muds by adding to the mud from 1-20 ppb of a copolymer as claimed in any one of Claims 1-3.

10. An aqueous oil drilling mud containing from 1-20 ppb of a copolymer as claimed in any one of Claims 1-3.

3700/PG/FZ

<u>Claims</u> ( For Austria )

1.  A process for the preparation of a water-soluble or water-dispersible graft copolymer of lignite or humic acid with a vinyl monomer, the lignite or humic acid constituting at least 20% of the dry weight of the product, characterised by the step of polymerising the vinyl monomer in the presence of the lignite or humic acid in an aqueous or organic medium.

2.  A process as claimed in Claim 1 in which the vinyl monomer is acrylic acid.

3.  A process as claimed in Claim 1 or Claim 2 in which the lignite or humic acid constitutes from 50 to 80% of the dry weight of the product.

4.  A process as claimed in any one of Claims 1 to 3 in which the polymerisation conditions are such that the vinyl monomer, if polymerised under the same conditions in the absence of lignite, would give a polymer of molecular weight from 2000 to 20000.

5.  A process as claimed in any one of the preceding claims in which polymerisation is carried out in the presence of from 1% to 10% of initiator (based on the weight of vinyl monomer).

6.  A process as claimed in any one of the preceding claims in which polymerisation is carried out in the presence of from 0.1% to 5% of a chain-terminating agent (based on the weight of the vinyl monomer).

7.  A process as claimed in any one of the preceding claims in which the lignite is used in solid form and is subjected to a size reduction step before, during or after the steps of mixing with the vinyl monomer and polymerisation of the vinyl monomer.

8.  A process for reducing fluid loss in aqueous oil drilling muds by adding to the mud from 1-20 ppb of a copolymer prepared according to the process of any one of Claims 1-7.

9.  An aqueous oil drilling mud containing from 1-20 ppb of a copolymer prepared according to the process of any one of Claims 1-7.